# EUROPÄISCHE PATENTSCHRIFT

(11) **EP 1 797 629 B1**
(45) Veröffentlichungstag und Bekanntmachung des Hinweises auf die Patenterteilung: **11.11.2009**
(21) Anmeldenummer: 05786298.9
(22) Anmeldetag: 13.09.2005
(51) Int. Cl.: H02K 5/26, F16H 7/14

(54) **VORRICHTUNG ZUM BEFESTIGEN UND SPANNEN EINES IN EINEM RIEMENTRIEB EINSETZBAREN AGGREGATS**
DEVICE FOR SECURING AND TENSING A UNIT WHICH CAN BE INSERTED INTO A BELT DRIVE
DISPOSITIF DE FIXATION ET DE TENSIONNEMENT D'UN GROUPE EMPLOYE DANS UN ENTRAINEMENT A COURROIE

(30) Priorität: 05.10.2004 DE 102004048284
(43) Veröffentlichungstag der Anmeldung: 20.06.2007
(73) Patentinhaber: Schaeffler KG, 91074 Herzogenaurach (DE)
(72) Erfinder: BOGNER, Michael, 90542 Eckental (DE)
(86) Internationale Anmeldenummer: PCT/EP2005/009814
(87) Internationale Veröffentlichungsnummer: WO 2006/037433

(56) Entgegenhaltungen:
- DE-A1- 3 635 061
- DE-A1- 10 057 818
- DE-U1- 8 808 854
- GB-A- 946 295
- GB-A- 1 210 723
- US-A- 2 310 081
- US-A- 4 789 127

## Beschreibung

### Gebiet der Erfindung

Die Erfindung betrifft eine Vorrichtung zum Befestigen und Spannen eines in einem Riementrieb einsetzbaren Aggregats einer Brennkraftmaschine, wobei die Vorrichtung wenigstens ein Halteelement umfasst, das form- und/oder kraftschlüssig an dem Aggregat befestigbar oder befestigt ist.

### Hintergrund der Erfindung

In der WO 03/012960 wird eine elektrische Maschine wie ein Generator beschrieben, die an unterschiedliche Verbrennungsmotoren angepasst werden kann. Zu diesem Zweck sind abnehmbare Befestigungsvorrichtungen vorgesehen, um den Generator fest mit dem Motor zu verbinden. Diese Vorrichtung eignet sich insbesondere für den Ersatzteilmarkt, da wenige Grundtypen von Generatoren mittels der unterschiedlichen Befestigungsvorrichtungen an eine große Anzahl von Verbrennungsmotoren angepasst werden können. Das Spannen des Riementriebs muss allerdings separat von der Befestigung des Aggregats erfolgen.

Die US 2,310,081 offenbart eine Vorrichtung zum Befestigen und Spannen eines in einem Riementrieb einsetzbaren Aggregates einer Brennkraftmaschine, wobei die Vorrichtung separat von dem Aggregat montierbar ist und wenigstens ein Halteelement sowie ein Spannelement umfasst, wobei das Halteelement formschlüssig und / oder kraftschlüssig an dem Aggregat befestigbar ist und das Halteelement ein erstes Lagerauge umfasst, mit dem das Halteelement gelenkig an einem Gehäuse der Brennkraftmaschine befestigt werden kann und an einem zweiten Lagerauge des Halteelements das Spannelement zum Spannen des Riementriebs gelenkig befestigt ist.

### Zusammenfassung der Erfindung

Der Erfindung liegt das Problem zugrunde, eine Vorrichtung anzugeben, deren Einsatzgebiet erweitert ist.

Zur Lösung dieses Problems ist bei einer Vorrichtung zum Befestigen und Spannen eines Aggregats der eingangs genannten Art erfindungsgemäß vorgesehen, dass an dem Halteelement ein Spannelement zum Spannen des Riementriebs angebracht ist.

Die Erfindung ermöglicht eine weitgehende Standardisierung und eine Beschränkung auf wenige Typen von Aggregaten, die mit dem jeweiligen Halte- und Spannelement an unterschiedliche Einbauverhältnisse anpassbar sind. Das Halteelement und das Spannelement bilden eine Befestigungsvorrichtung, die separat von dem Aggregat montierbar ist. Da diese Befestigungsvorrichtung von dem Aggregat getrennt ist, ist es möglich, das Halteelement mit dem Spannelement als modulartige, vorgefertigte Baugruppe auszubilden, die an dem Gehäuse einer Brennkraftmaschine montiert werden kann. In einem zweiten, separaten Schritt kann das Aggregat unabhängig von der Befestigungsvorrichtung montiert werden. Dadurch ergibt sich der große Vorteil, dass die bisher übliche Variantenvielfalt auf wenige Standardgrößen reduziert werden kann, die mittels der erfindungsgemäßen Befestigungsvorrichtung montiert werden können. Der hier verwendete Begriff Aggregat umfasst beispielsweise Generatoren, Startergeneratoren, Klimakompressoren, Lenkhilfspumpen und ähnliche Komponenten von Riementrieben.

Es wird besonders bevorzugt, dass das Spannelement ein mechanisches und/oder hydraulisches Spannelement ist. Derartige Riemenspanner sind bekannt, sie bestehen zumeist aus einem Federelement, das mit einem Dämpferelement kombiniert ist. Wenn derartige Spannelemente eingesetzt werden, kann dem Riemen, der auf einer Scheibe des Aggregats läuft, in jedem Betriebszustand die richtige Spannung aufgeprägt werden.

Die erfindungsgemäße Befestigungsvorrichtung ist so ausgebildet, dass das Spannelement einerseits an dem Halteelement befestigt und andererseits des Spannelement an der Brennkraftmaschine befestigbar ist. Bei einem derartigen Aufbau stützt sich das Aggregat über das Spannelement an der Brennkraftmaschine ab. Das Halteelement weist ein zweites Lagerauge auf, an dem das Spannelement gelenkig befestigt ist. Dadurch wird das Aggregat einerseits durch das Spannelement gehalten, wobei das zweite Lagerauge, an dem das Spannelement angebracht ist, andererseits um ein erstes Lagerauge drehbar gelagert ist, über das die Vorrichtung gelenkig an der Brennkraftmaschine befestigbar ist. Die erfindungsgemäße Befestigungsvorrichtung umfasst somit ein zweites Lagerauge, an dem das Spannelement angreift und ein erstes Lagerauge, über das das Halteelement an dem Gehäuse der Brennkraftmaschine befestigbar ist.

Die erfindungsgemäße Vorrichtung zum Befestigen und Spannen eines in einem Riementrieb einsetzbaren Aggregats kann eine Klemmverbindung aufweisen, über die das Halteelement und das Aggregat miteinander verbindbar sind. Diese Klemmverbindung kann beispielsweise als Schwalbenschwanzverbindung ausgebildet sein, daneben sind weitere Klemmverbindungen denkbar, beispielsweise kann ein Klemmstein eingesetzt werden, um die beiden Teile lösbar miteinander zu verbinden.

Bei der erfindungsgemäßen Vorrichtung kann es vorgesehen sein, dass das Aggregat radial oder axial bezüglich seines Gehäuses mit dem Halteelement verbindbar oder aufschiebbar ist. Die Art der Befestigung kann somit optimal in Abhängigkeit der jeweiligen Einbauverhältnisse gewählt werden.

Die erfindungsgemäße Vorrichtung zum Befestigen und Spannen eines in einem Riementrieb einsetzbaren Aggregats kann ferner ein Sicherungsblech umfassen, das das Aggregat nach dem Einbau gegen Herausrutschen aus dem Halteelement sichert.

### Kurze Beschreibung der Zeichnungen

Weitere Vorteile und Einzelheiten der Erfindung werden anhand eines Ausführungsbeispiels unter Bezugnahme auf die Figuren 1-6 erläutert. Die Figuren sind schematische Zeichnungen und zeigen:
- Fig. 1: ein Ausführungsbeispiel einer erfindungsgemäßen Vor- richtung zum Befestigen und Spannen eines Aggregats mit ei- nem Halteelement und einem Spannelement;
- Fig. 2: die in Fig. 1 gezeigte Vorrichtung in einer perspektivischen An- sicht;
- Fig. 3: eine perspektivische Ansicht des Halteelements mit eingesetz- tem Aggregat;
- Fig. 4: eine weitere perspektivische Ansicht des Halteelements mit eingesetztem Aggregat;
- Fig. 5: eine Explosionszeichnung des Haltelements und des Aggre- gats, das durch ein Sicherungsblech gesichert wird;
- Fig. 6: eine weitere perspektivische Ansicht der Anordnung von Fig. 5; und
- Fig. 7: ein Beispiel, dass das Verständnis der Erfindung erleichtert, bei dem das Halteelement zwei sepa- rate Halterungen umfasst.

### Detaillierte Beschreibung der Zeichnungen

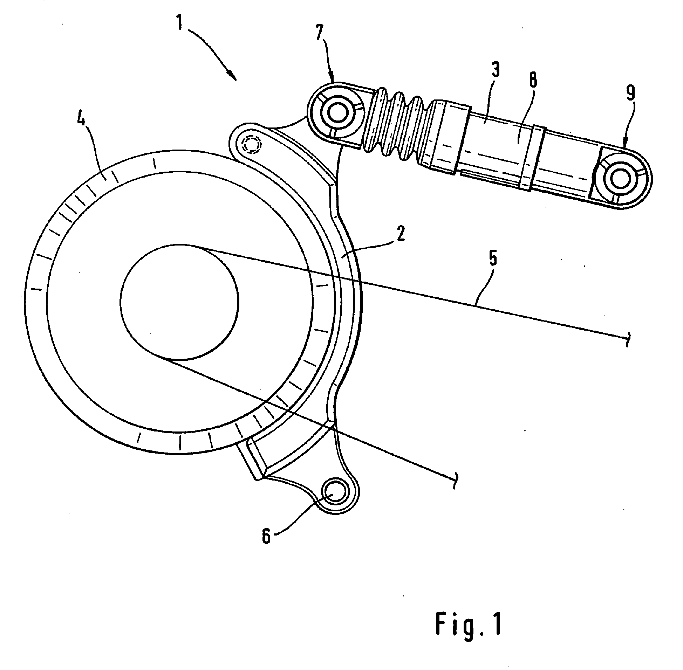

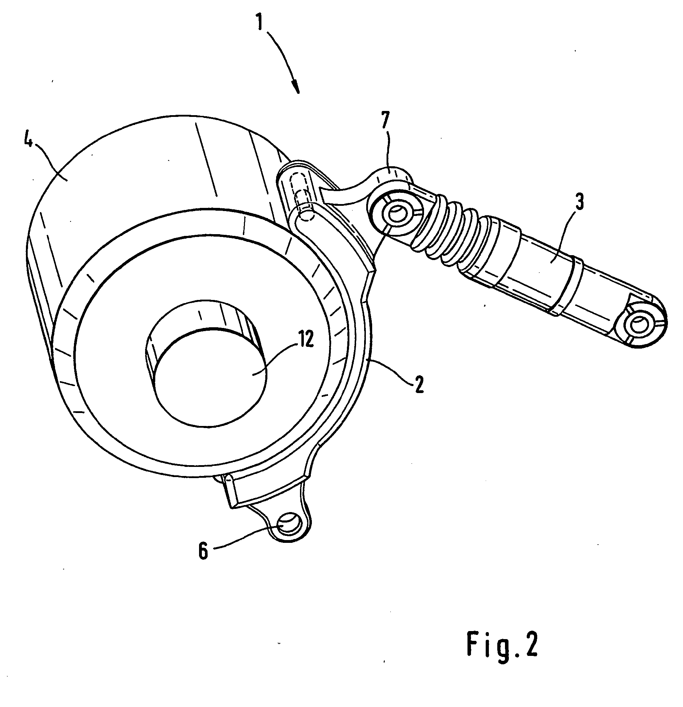

Die Figuren 1 und 2 zeigen eine Vorrichtung zum Befestigen eines als Generator oder Startergenerator ausgebildeten Aggregats mit einem Halteelement und einem Spannelement.

Die Befestigungsvorrichtung eignet sich gleichermaßen für Generatoren und Startergeneratoren, darüber hinaus auch für Klimakompressoren oder Lenkhilfspumpen. Generatoren werden von der Brennkraftmaschine angetrieben und erzeugen die für den Betrieb eines Kraftfahrzeugs erforderliche elektrische Energie. Startergeneratoren können entweder als Generator oder als Motor betrieben werden. Wenn ein Startergenerator als Generator betrieben wird, wird er über den Riementrieb von der Brennkraftmaschine angetrieben und erzeugt elektrische Energie. Der Startergenerator kann jedoch auch als Motor betrieben werden, um die Brennkraftmaschine zu starten. In diesem Fall kann ein separater Anlassermotor entfallen.

Die Figuren 1 und 2 zeigen eine Befestigungsvorrichtung 1, die aus einem Halteelement 2 und einem Spannelement 3 besteht. Durch die Befestigungsvorrichtung 1 wird ein Startergenerator 4 an einer nicht gezeigten Brennkraftmaschine befestigt, wobei der Startergenerator 4 über einen Riemen 5 angetrieben wird oder den Riemen 5 antreibt.

Das Halteelement 2 ist als gekrümmter Haltebügel ausgebildet und an die Außenkontur des Startergenerators 4 angepasst. Über ein erstes Lagerauge 6 kann das Halteelement 2 gelenkig an dem Gehäuse der Brennkraftmaschine befestigt werden. An einem zweiten Lagerauge 7 des Halteelements 2 ist das Spannelement 3 gelenkig befestigt. Das Spannelement 3 ist als hydraulisches Spannelement 8 ausgebildet, das einerseits eine bestimmte Spannung des Riemens 5 erzeugt, indem es den Startergenerator 4 aus dem Riementrieb herausdrückt, andererseits dient es zur Dämpfung von auftretenden Schwingungen des Riementriebs. Das andere Ende 9 des Spannelements 8 kann mit seinem Lagerauge direkt oder über eine separate Haltevorrichtung gelenkig an dem Gehäuse der Brennkraftmaschine befestigt werden. Das Haltelement 2 bildet zusammen mit dem Spannelement 3 eine vorgefertigte Baugruppe, die vor der Montage des Startergenerators 4 montiert werden kann.

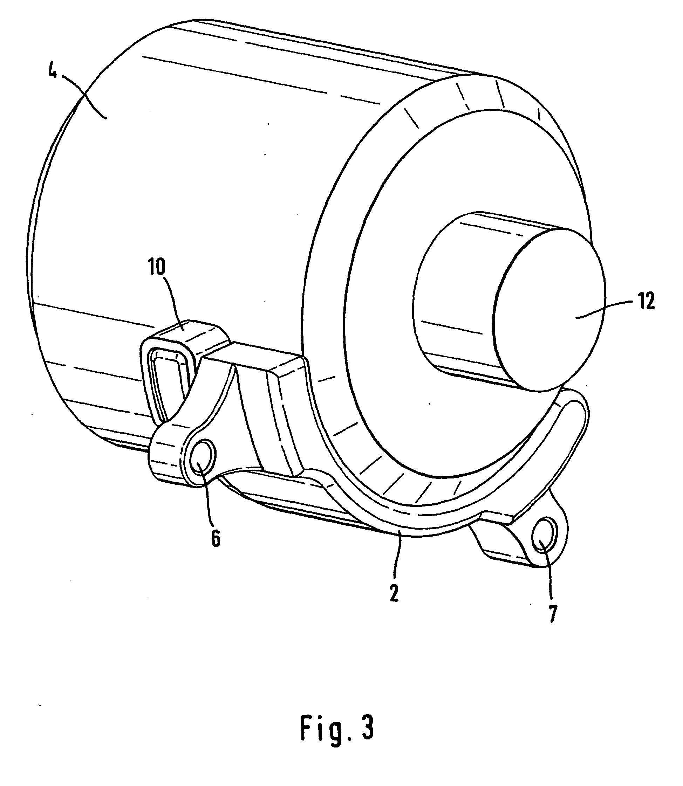

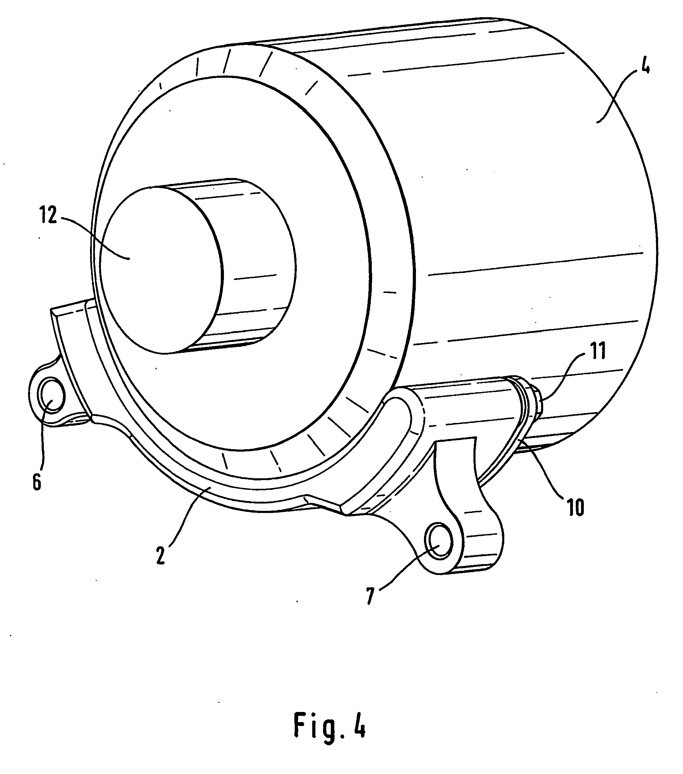

Die Figuren 3 und 4 zeigen das Halteelement mit eingesetztem Startergenerator, das Spannelement 3 ist aus Gründen der Übersichtlichkeit nicht dargestellt.

Der Startergenerator 4 und das Haltelement 2 sind über eine Schwalbenschwanzverbindung miteinander verbindbar. Nach der Montage ist der Starter-generator 4 fest mit dem Halteelement 2 verbunden, das den Startergenerator 4 in Umfangsrichtung umgibt.

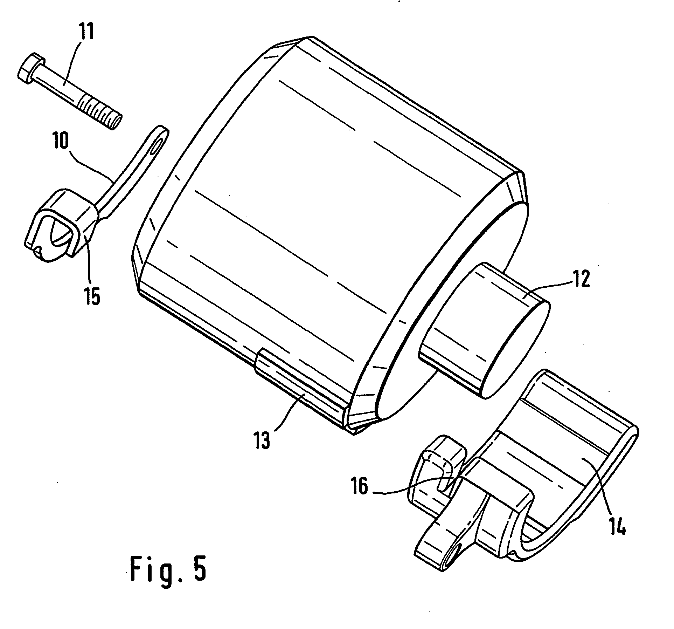

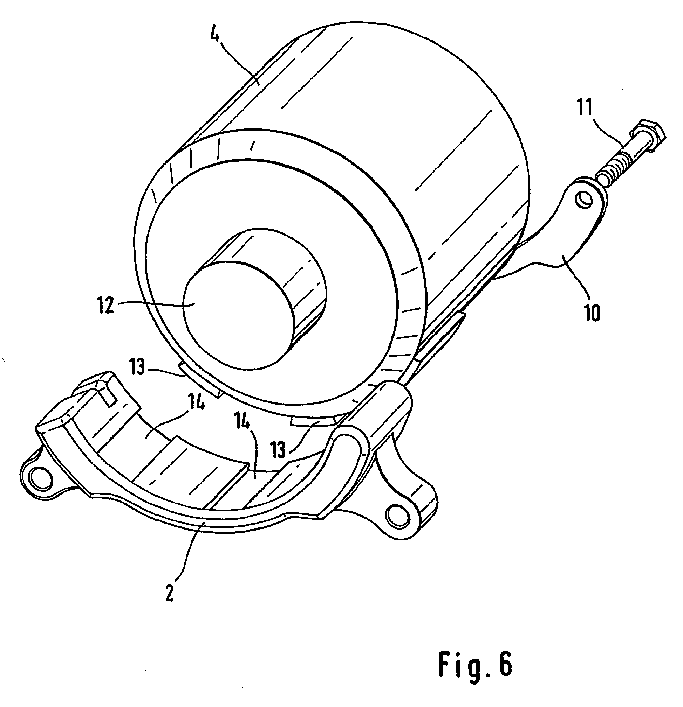

Die Figuren 5 und 6 zeigen Explosionszeichnungen des Halteelements und des Startergenerators, nicht dargestellt ist das zugehörige Spannelement 3.

Es ist erkennbar, dass das Haltelement zusätzlich ein Sicherungsblech 10 umfasst, das mit einer Schraube 11 gesichert werden kann.

Der Startergenerator 4 besitzt an der Seite, an der sich die schematisch dargestellte Riemenscheibe 12 befindet, drei über den Umfang verteilte schwalbenschwanzförmige Vorsprünge 13, die in entsprechend gegengleich ausgebildete Schwalbenschwanznuten 14 des Halteelements 2 einschiebbar sind. In dem dargestellten Ausführungsbeispiel kann der Startergenerator 4 axial in das Halteelement 2 eingeschoben werden. Um ein Herausrutschen des Startergenerators 4 aus dem Halteelement 2 zu verhindern, wird anschließend das Sicherungsblech 10 von der Rückseite her gegen das Halteelement 2 geschraubt. Das Sicherungsblech weist einen Bügel 15 auf, der in eine Nut 16 des Halteelements 2 eingehängt wird. Das Sicherungsblech 10 wird mit der Schraube 11 gesichert, die in ein Gewinde des Halteelements 2 einschraubbar ist.

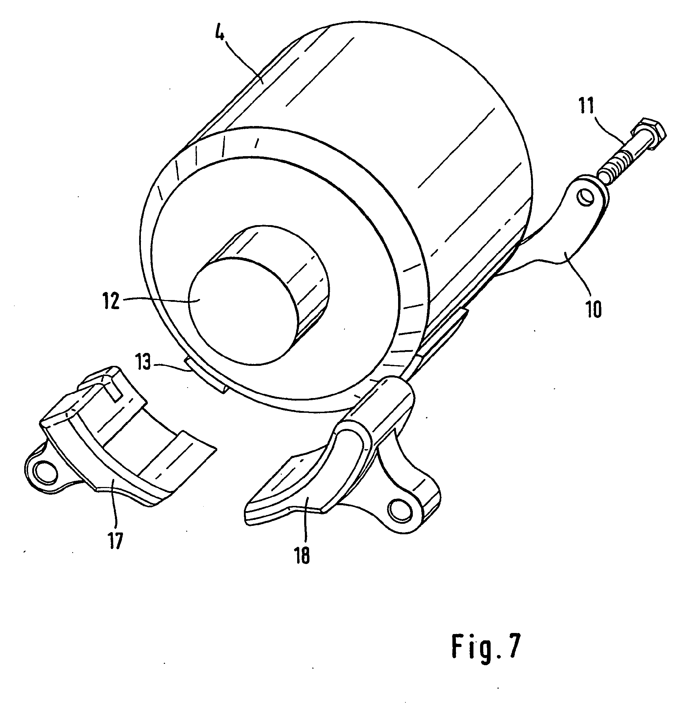

Fig. 7 zeigt ein Beispiel, welches das Verständnis der Erfindung erleichtert, bei dem das Haltelement 2 separate Halterungen umfasst.

Anders als bei dem vorhergehenden Ausführungsbeispiel wird der Startergenerator 4 von einer ersten Halterung 17 und einer zweiten Halterung 18 gehalten. Jede der Halterungen 17, 18 weist eine Schwalbenschwanznut auf, in die ein schwalbenschwanzförmiger Vorsprung des Startergenerators 4 einsetzbar ist. Analog zu dem ersten Ausführungsbeispiel kann eine der Halterungen gelenkig an dem Gehäuse der Brennkraftmaschine befestigt werden, an dem Lagerauge der anderen Halterung kann ein Spannelement befestigt werden.

### Bezugszahlen

- 1: Befestigungsvorrichtung
- 2: Halteelement
- 3: Spannelement
- 4: Startergenerator
- 5: Riemen
- 6: Lagerauge
- 7: Lagerauge
- 8: Spannelement
- 9: Ende
- 10: Sicherungsblech
- 11: Schraube
- 12: Riemenscheibe
- 13: Vorsprung
- 14: Schwalbenschwanznut
- 15: Bügel
- 16: Nut
- 17: Halterung
- 18: Halterung

## Patentansprüche

1. Vorrichtung zum Befestigen und Spannen eines in einem Riementrieb einsetzbaren Aggregates einer Brennkraftmaschine, wobei die Vorrichtung separat von dem Aggregat montierbar ist und wenigstens ein Halteelement (2) sowie ein Spannelement (3) umfasst, wobei das Halteelement (2) formschlüssig und / oder kraftschlüssig an dem Aggregat befestigbar ist und dabei das Halteelement (2) einer Außenkontur des Aggregates angepasst als gekrümmter Haltebügel (2) gestaltet ist und das Halteelement (2) weiterhin ein erstes Lagerauge (6) umfasst, mit dem das Halteelement (2) gelenkig an einem Gehäuse der Brennkraftmaschine befestigt werden kann und an einem zweiten Lagerauge (7) des Halteelements (2) das Spannelement (3) zum Spannen des Riementriebs gelenkig befestigt ist.

2. Vorrichtung nach Anspruch 1, wobei das Spannelement (3) ein mechanisches und / oder hydraulisches Spannelement (8) ist.

3. Vorrichtung nach einem der vorangehenden Ansprüche, wobei das Halteelement (2) und das Spannelement (3) eine vormontierte, eine modulartige Einheit bilden.

4. Aggregat mit einer Vorrichtung nach einem der Ansprüche 1 bis 3, wobei das Halteelement (2) und das Aggregat über eine Klemmverbindung, insbesondere eine Schwalbenschwanzverbindung, miteinander verbunden sind.

5. Vorrichtung nach einem der Ansprüche 1 bis 3, wobei das Aggregat radial oder axial bezüglich seines Gehäuses mit dem Halteelement (2) verbindbar oder auf das Haltelement (2) aufschiebbar ist.

6. Vorrichtung nach einem der Ansprüche 1 bis 3, wobei ein Sicherungsblech (10) vorgesehen ist, um das Aggregat nach dem Einbau in dem Halteelement (2) zu sichern.

7. Vorrichtung nach einem der Ansprüche 1 bis 3, wobei das Aggregat ein Generator, ein Startergenerator (4), eine Lenkhilfspumpe oder ein Klimakompressor ist.

## Claims

1. Device for fastening and tensioning an assembly, which can be used in a belt drive, of an internal combustion engine, with it being possible for the device to be mounted separately from the assembly and with the device comprising at least one holding element (2) and a tensioning element (3), with it being possible for the holding element (2) to be fastened to the assembly in a positively locking and/or non-positively locking manner, and with the holding element (2) being designed here as a curved holding bracket (2) which is matched to an outer contour of the assembly, and with the holding element (2) also comprising a first bearing lug (6) by means of which the holding element (2) can be articulatedly fastened to a housing of the internal combustion engine, and with the tensioning element (3) for tensioning the belt drive being articulatedly fastened to a second bearing lug (7) of the holding element (2).

2. Device according to Claim 1, with the tensioning element (3) being a mechanical and/or hydraulic tensioning element (8).

3. Device according to one of the preceding claims, with the holding element (2) and the tensioning element (3) forming a pre-assembled modular unit.

4. Assembly having a device according to one of Claims 1 to 3, with the holding element (2) and the assembly being connected to one another by means of a clamping connection, in particular a dovetail connection.

5. Device according to one of Claims 1 to 3, with it being possible for the assembly to be connected to the holding element (2) or pushed onto the holding element (2) radially or axially with respect to the housing of said assembly.

6. Device according to one of Claims 1 to 3, with a securing plate (10) being provided in order to secure the assembly after installation in the holding element (2).

7. Device according to one of Claims 1 to 3, with the assembly being a generator, a starter-generator (4), a power steering pump or an air-conditioning compressor.

## Revendications

1. Dispositif pour fixer et tendre une unité d'un moteur à combustion interne pouvant être insérée dans un entraînement à courroie, le dispositif pouvant être monté séparément de l'unité et comprenant au moins un élément de retenue (2) ainsi qu'un élément de tensionnement (3), l'élément de retenue (2) pouvant être fixé par engagement par correspondance géométrique et/ou par force à l'unité et en l'occurrence l'élément de retenue (2) étant configuré sous forme d'étrier de retenue courbe (2) adapté à un contour extérieur de l'unité, et l'élément de retenue (2) comprenant en outre un premier trou de palier (6) avec lequel l'élément de retenue (2) peut être fixé de manière articulée à un boîtier du moteur à combustion interne et l'élément de tensionnement (3) étant fixé de manière articulée à un deuxième trou de palier (7) de l'élément de retenue (2) pour tendre l'entraînement à courroie.

2. Dispositif selon la revendication 1, dans lequel l'élément de tensionnement (3) est un élément de tensionnement mécanique et/ou hydraulique (8).

3. Dispositif selon l'une quelconque des revendications précédentes, dans lequel l'élément de retenue (2) et l'élément de tensionnement (3) forment un ensemble prémonté modulaire.

4. Unité comprenant un dispositif selon l'une quelconque des revendications 1 à 3, dans lequel l'élément de retenue (2) et l'unité sont connectés l'un à l'autre par le biais d'une connexion par serrage, notamment une connexion en queue d'aronde.

5. Dispositif selon l'une quelconque des revendications 1 à 3, dans lequel l'unité peut être connectée radialement ou axialement par rapport à son boîtier à l'élément de retenue (2), ou peut être poussée sur l'élément de retenue (2).

6. Dispositif selon l'une quelconque des revendications 1 à 3, dans lequel une tôle de fixation (10) est prévue pour fixer l'unité dans l'élément de retenue (2) après l'installation.

7. Dispositif selon l'une quelconque des revendications 1 à 3, dans lequel l'unité est un générateur, un générateur-démarreur (4), une pompe auxiliaire de direction ou un compresseur de climatisation.
